# EUROPÄISCHE PATENTANMELDUNG

(11) **EP 2 641 515 A1**
(43) Veröffentlichungstag der Anmeldung: **25.09.2013**
(21) Anmeldenummer: 13160290.6
(22) Anmeldetag: 21.03.2013
(51) Int. Cl.: A47J 25/00

(54) **Fruchtfleisch-Schneider**

(30) Priorität: 21.03.2012 DE 202012002901 U
(71) Anmelder: Hansi - Siebert GmbH & Co. KG, 73035 Göppingen (DE)
(72) Erfinder: Siebert, Peter, 73035 Göppingen (DE)
(74) Vertreter: Koepe & Partner

(57) **Zusammenfassung**

Die vorliegende Erfindung betrifft eine Schneid-Vorrichtung (1) zum Trennen eines Fruchtfleisch-Körpers (A) einer reifen Frucht von Schale und Kern und gleichzeitiges Schneiden des Fruchtfleisch-Körpers (A) in Form von Helixartigen Fruchtfleisch-Windungen, mit einem Kern-Zylinder (10), einer an dessen einem Ende (11) kraftschlüssig angebrachten Antriebsvorrichtung (13) und einer an dessen anderem Ende (12) kraftschlüssig angebrachten Schneid-Einrichtung (14) mit einem eine Steigung (α) in Drehrichtung aufweisenden runden Schneide-Teller (15), wobei die Schneid-Einrichtung (14) auf ihrer in Schneidrichtung vorderen Seite (15 a) des runden Schneide-Tellers (15) ein in seitlicher Ansicht L-förmiges Schneidmesser (16) aufweist, das bei Drehen der Schneid-Vorrichtung (1) in den Fruchtfleisch-Körper (A) eindringt und dabei die Schale vom Fruchtfleisch-Körper (A) trennt und den Fruchtfleisch-Körper (A) gleichzeitig in Helix-artige Fruchtfleisch-Windungen schneidet, worin die Schneid-Einrichtung (14) auf der Unterseite des runden Schneide-Tellers (15) eine mit dem Kern-Zylinder (10) konzentrische Schneide (17) zum innenseitigen Trennen des Frucht-Kerns vom Fruchtfleisch-Körper (A) aufweist, wobei die Schneid-Einrichtung (14) in Bezug auf den Kern-Zylinder (10) mittels einer an das untere Ende (12) anbringbaren und von dem unteren Ende lösbaren kraftschlüssigen Verbindung (18) angebracht ist.

## Beschreibung

Die vorliegende Erfindung betrifft einen Fruchtfleisch-Schneider. Insbesondere betrifft die vorliegende Erfindung einen Hand-Schneider für reife Früchte wie beispielsweise Ananas-Früchte, mit dem die Frucht unter Herausschneiden des Frucht-Innern in Scheiben geschnitten werden kann. Dabei kann durch Anbringen unterschiedlich großer Schneid-Module unterschiedlichen Größen der Frucht, beispielsweise der Ananas-Frucht, Rechnung getragen werden.

Die Druckschrift EP-A 0 483 930 beschreibt ein Werkzeug zum Trennen von Kern und Schale einer Ananas-Frucht vom Fruchtfleisch, bestehend aus einem Handgriff und einer im Wesentlichen zylinderförmigen Schneidhülse, an deren vom Handgriff entfernten Ende eine Schneidvorrichtung angebracht sein kann. Die Schneidvorrichtung besteht aus einem einstückig an dem Zylinder angebrachten Schneidteller mit Schraubengang, der bei Drehen des Werkzeugs im Uhrzeigersinn auf der geschälten Frucht mit seinem (in Schneidrichtung am vorderen Ende des Schneidtellers befindlichen) Schneidmesser in die Frucht gegraben wird und dabei eine kontinuierliche Fruchtfleisch-Spirale aus der Frucht herausschneidet.

Die Druckschrift DE-U 20 2011 106 355 hat das vorgenannte Werkzeug noch dahingehend weiterentwickelt, daß man mittels einer an dem Werkzeug angebrachten Vorrichtung die Zahl der aus dem Fruchtfleisch herausgeschnittenen Fruchtfleisch-Spiralen zählen kann. Dadurch kann man im häuslichen Einsatz des Werkzeugs gezielt eine definierte Zahl von Fruchtfleisch-Spiralen schneiden und die restliche Frucht ungeschnitten aufbewahren, was bekanntlich die Haltbarkeit (gegenüber dem Aufbewahren von geschnittenen Scheiben) erhöht. Eine entsprechende Anzeige ("scale") wies jedoch auch der aus der EP-A 0 483 930 vorbekannte Ananas-Schneider auf.

Die Druckschrift DE-U 20 2005 008 490 beschreibt einen Ananas-Schneider in Form eines mit einem Kraftarm versehenen Ständers, mittels dessen Druck auf die aus einer Hülse bestehende Schneidvorrichtung aufgebracht werden kann. Die Ananas-Frucht wird unter die Schneide gelegt, und bei Aufbringung einer Vertikalkraft auf den Kraftarm dringt die Schneide in den Fruchtkörper der Ananas-Frucht ein und trennt den harten Kern und die Schale vom Fruchtfleisch. Zurück bleibt eine im Wesentlichen ganze geschälte Frucht ohne Kern.

Die in beiden erstgenannten Druckschriften beschriebenen Vorrichtungen sind grundsätzlich vorteilhaft, weisen jedoch den Nachteil auf, daß man dann, wenn die Schneide nicht mehr scharf ist, diese nachschärfen muß, was sich bei der relativ kleinen Schneide als schwierig darstellt, oder ein neues Werkzeug kaufen muß. Zum Anderen läßt sich die Schnittdicke der geschnittenen Spiral-Fruchtfleisch-Scheiben nicht variieren, was beim praktischen Einsatz mitunter erwünscht ist. Darüber hinaus läßt sich das Schneidwerkzeug nicht auf unterschiedliche Ananas-Frucht-Durchmesser einstellen, was bedeutet, daß bei Früchte großen Durchmessers mehr Fruchtfleisch mit der Schale weggeschnitten wird und bei Früchten kleinen Durchmessers die Schale möglicherweise unvollständig weggeschnitten wird und die unangenehmen Spelzen der Schale teilweise zurückbleiben.

Die Aufgabe der Erfindung besteht also darin, den vorbekannten Ananas-Schneider dahingehend weiterzuentwickeln, daß an seinem unteren Ende verschiedene Schneidwerkzeige angebracht werden können, die einerseits dem Bedürfnis nach einer neuen, scharfen Klinge für den Schneidvorgang Rechnung tragen, andererseits aber auch ermöglichen, daß Fruchtfleisch-Scheiben unterschiedlicher Dicke je nach Wunsch und Bedarf geschnitten werden können, und des Weiteren erlauben, daß das Schneidwerkzeug an Früchten, beispielsweise Ananas-Früchten, unterschiedlichen Durchmessers angesetzt werden kann.

Diese Aufgabe wird durch die Merkmale des Patentanspruchs 1 gelöst, und dabei insbesondere durch die Merkmale des kennzeichnenden Teils des Patentanspruchs 1. Es wurde nämlich überraschenderweise gefunden, daß es möglich ist, durch eine geeignete Verbindung zwischen dem zylindrischen Körper des Ananas-Schneiders, also der Schneid-Vorrichtung gemäß der Erfindung, und der Schneid-Einrichtung die Möglichkeit zu schaffen, Schneid-Einrichtungen unterschiedlicher Dimensionen an dem zylindrischen Körper des Ananas-Schneiders anzubringen und damit nicht nur die Variabilität des Schneiders zu verbessern, sondern auch das Problem zu lösen, eine frische, gut schneidende Klinge in Ersatz einer älteren, unscharf gewordenen Klinge einzusetzen.

Die Erfindung betrifft daher eine Schneid-Vorrichtung zum Trennen eines Fruchtfleisch-Körpers einer reifen Frucht von Schale und Kern und gleichzeitiges Schneiden des Fruchtfleisch-Körpers in Form von Helix-artigen Fruchtfleisch-Windungen, mit einem Kern-Zylinder, einer an dessen einem Ende kraftschlüssig angebrachten Antriebsvorrichtung und einer an dessen anderem Ende kraftschlüssig angebrachten Schneid-Einrichtung mit einem eine Steigung in Drehrichtung aufweisenden runden Schneide-Teller, wobei die Schneid-Einrichtung auf ihrer in Schneidrichtung vorderen Seite des runden Schneide-Tellers ein in seitlicher Ansicht L-förmiges Schneidmesser aufweist, das bei Drehen der Schneid-Vorrichtung in den Fruchtfleisch-Körper eindringt und dabei die Schale vom Fruchtfleisch-Körper trennt und den Fruchtfleisch-Körper gleichzeitig in Helix-artige Fruchtfleisch-Windungen schneidet, worin die Schneid-Einrichtung auf der Unterseite des runden Schneide-Tellers eine mit dem Kern-Zylinder konzentrische Schneide zum innenseitigen Trennen des Frucht-Kerns vom Fruchtfleisch-Körper aufweist, wobei die Schneid-Einrichtung in Bezug auf den Kern-Zylinder mittels einer an das untere Ende anbringbaren und von dem unteren Ende lösbaren kraftschlüssigen Verbindung angebracht ist.

Vorteilhafte Ausführungsformen der erfindungsgemäßen Schneid-Vorrichtung sind in den abhängigen Ansprüchen 2 bis 7 beansprucht.

Die Erfindung betrifft auch die Verwendung einer Schneid-Vorrichtung gemäß der Erfindung, einschließlich ihrer bevorzugten Ausführungsformen, zum Schälen, Entkernen und Schneiden von Früchten und insbesondere von Ananas.

Die Erfindung wird nachfolgend unter Bezugnahme auf bevorzugte Ausführungsformen, die in den Figuren anschaulich und lediglich beispielhaft dargestellt sind, ohne daß jedoch die Erfindung auf diese beschränkt sein soll, näher erläutert. Es zeigen:
Figur 1 A zeigt eine beispielhafte gebrauchsfertige Schneid-Vorrichtung 1 gemäß der Erfindung in Front-Ansicht;
die Figuren 1 B, 1 C, 1 D, 1 E und 1 F zeigen jeweils eine beispielhafte gebrauchsfertige Schneid-Vorrichtung 1 gemäß der Erfindung in Ansicht von oben, in Ansicht von unten, in seitlicher Ansicht, in Front-Ansicht im Schnitt und in seitlicher Ansicht im Schnitt;
Figur 2 zeigt eine beispielhafte gebrauchsfertige Schneid-Vorrichtung 1 gemäß der Erfindung in Explosions-Ansicht mit zwei (schematisch angedeuteten unterschiedlichen Schneid-Einrichtungen 14;
Figur 3 eine seitliche Schnitt-Ansicht des unteren Teils 12 des Kern-Zylinders 10 in kraftschlüssiger Gewinde-Verbindung 18 a mit der Schneid-Einrichtung 14; und
Figur 4 eine perspektivische Ansicht des allgemeinen Prinzips einer sogenannten "Bajonett-Verbindung", anwendbar auf das untere Ende 12 des Kern-Zylinders 10 einerseits und das obere Ende 14 a der Schneideinrichtung 14.

In der vorliegenden Beschreibung und in den Schutzansprüchen werden die Begriffe "umfaßt", "umfassen" bzw. "umfassend" so verstanden, dass sie eine Aufzählung von Elementen angeben, die den genannten Begriffen folgen, wobei die Aufzählung der Elemente nicht abschließend ist, sondern nur die wesentlichen Elemente bzw. Merkmale der Erfindung liefert. Die genannten Begriffe können in diesen Fällen also mehr die Bedeutung von "einschließend" oder "einschließlich" haben. In bevorzugten Ausführungsformen bzw. Unteransprüchen oder abhängigen Ansprüchen können (müssen jedoch nicht zwingend) weitere Elemente enthalten sein, die sich auf bevorzugte Ausführungsformen der Erfindung beziehen, die jedoch nicht beschränkend sind.

Die Begriffe "umfaßt", "umfassen" bzw. "umfassend" werden jedoch alternativ auch so verstanden, dass sie eine vollständige Aufzählung von notwendigen Merkmalen der Erfindung angeben und damit den genannten Begriffen mehr die Bedeutung von "bestehend aus" (den darauf folgenden Elementen bzw. Merkmalen) geben. In weiteren bevorzugten Ausführungsformen bzw. abhängigen Ansprüchen können jedoch auch in diesen Fällen bevorzugte Ausführungsformen angegeben oder in abhängigen Ansprüchen beansprucht sein, die weitere Merkmale enthalten und damit die im unabhängigen Anspruch bzw. in der breitesten Ausführungsform beanspruchte bzw. beschriebene Erfindung weiter für bevorzugte Ausführungsformen spezifizieren.

Beide Bedeutungen der Begriffe "umfaßt", "umfassen" bzw. "umfassend" werden in der Beschreibung der vorliegenden Erfindung und in den Schutzansprüchen eingeschlossen und durch die Begriffe "umfaßt", "umfassen" bzw. "umfassend" angesprochen.

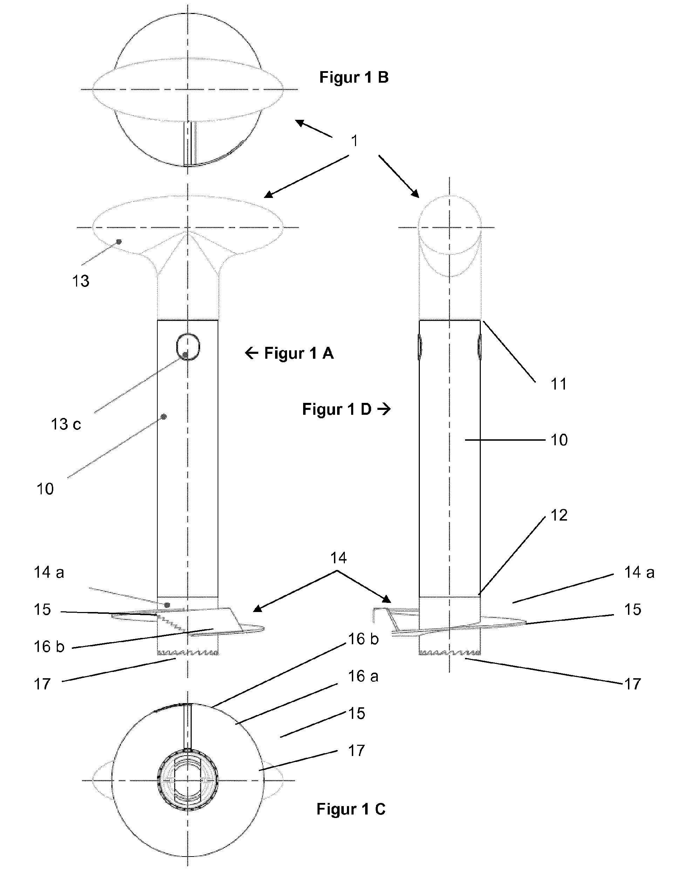

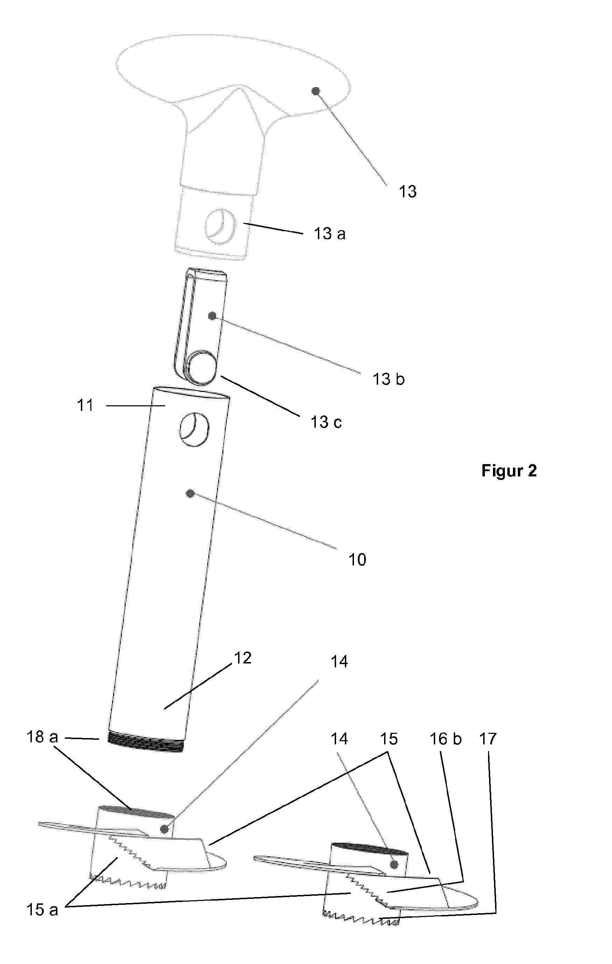

Es wird nun Bezug auf die Figuren 1 A und 2 genommen, die eine beispielhafte Ausführungsform der Erfindung zeigen. Figur 1 A und Figur 2, wie alle anderen Figuren und auch die nachfolgende detaillierte Beschreibung, dienen der beispielhaften und anschaulichen Erläuterung der Erfindung. Die vorliegende Erfindung ist jedoch nicht auf die Ausführungsformen der beispielhaften Figuren und auch nicht auf die nachfolgenden beispielhaften Beschreibungen einzelner Ausführungsformen beschränkt.

Figur 1 A zeigt eine beispielhafte gebrauchsfertige Schneid-Vorrichtung 1 gemäß der Erfindung in Front-Ansicht. Die Schneid-Vorrichtung 1 der vorliegenden Erfindung wird am Beispiel des Trennens eines Fruchtfleisch-Körpers A einer reifen Ananas-Frucht von deren (ungenießbarer) Schale und deren (hartem und damit wenig zum Verzehr begehrtem) Kern und des gleichzeitigen Schneidens des Fruchtkörpers einer Ananas-Frucht in Form Helix-artiger Ananas-Fruchtfleisch-Windungen beispielhaft beschrieben. An Stelle einer Ananas-Frucht können jedoch auch beliebige andere Früchte mit gleichem oder ähnlichem Aufbau der Frucht mit der vorliegenden Schneid-Vorrichtung 1 bearbeitet werden.

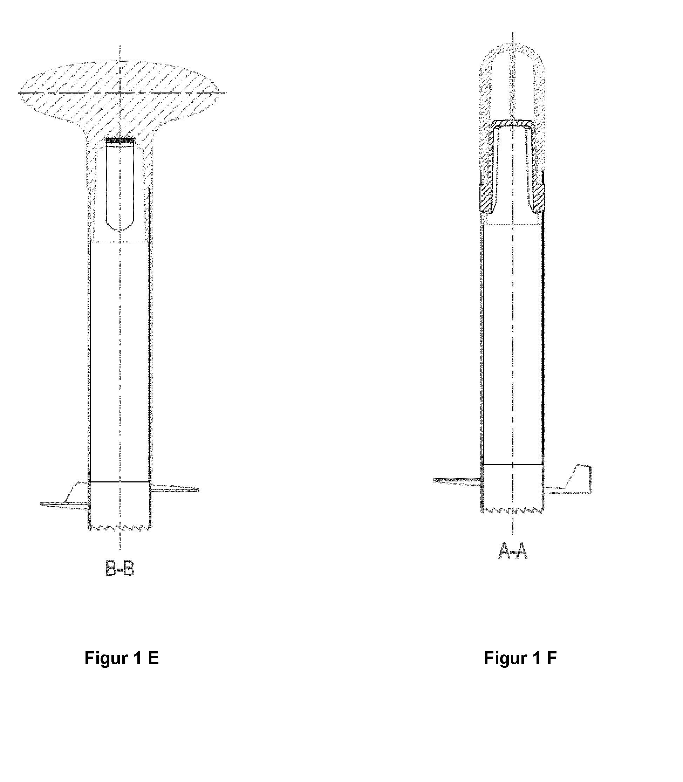

Figur 2 zeigt eine beispielhafte gebrauchsfertige Schneid-Vorrichtung 1 gemäß der Erfindung - wie sie auch aus Figur 1 ersichtlich ist - in Explosions-Ansicht.

Gemäß der Erfindung umfaßt die Schneid-Vorrichtung 1 einen Kern-Zylinder 10. Der Kern-Zylinder 10 besteht im Wesentlichen aus einem zylindrischen Rohr, das an seinem (in Gebrauchsrichtung, wie auch in den Figuren 1 A und 2 gezeigt) oberen Ende 11 und an seinem (in Gebrauchsrichtung, wie auch in den Figuren 1 A und 2 gezeigt) unteren Ende 12 offen ist. Das Material des Zylinders kann jedes vom Fachmann für den gewünschten Zweck als geeignet angesehene Material sein, einschließlich aus dem Stand der Technik bekannte Materialien, ohne daß die Erfindung diesbezüglich irgendwelchen Beschränkungen unterworfen ist. Beispielhafte Materialien sind Metalle oder Legierungen von Metallen. Alternativ können geeignete formstabile Kunststoffe verwendet werden. Bevorzugt sind Kern-Zylinder 10 aus Metall, beispielsweise (ohne Beschränkung) aus Edelstahl, gegebenenfalls mit veredelter (beispielsweise verchromter) Oberfläche, oder ausreichend harte Kunststoffe, wie beispielsweise (ohne Beschränkung) SAN (Styrol-Acrylnitril-Copolymer), PC (Polycarbonat) oder PMMA (Polymethylmethacrylat)..

An einem, erfindungsgemäß am (in Gebrauchsrichtung) oberen Ende 11 des Kern-Zylinders 10 ist erfindungsgemäß eine den Dreh-Vorgang ermöglichende Antriebs-Vorrichtung 13 angebracht. Dies kann bei maschinellem Betrieb eine die Drehung des Kern-Zylinders 10 um seine Längsachse ermöglichende maschinelle Antriebs-Vorrichtung sein, die kraftschlüssig an dem oberen Ende angebracht ist, und kann alternativ bei Handbetrieb ein für solche Zwecke von vergleichbaren Geräten bekannter Handgriff sein, beispielsweise ein T-förmig ausgebildeter Griff. Die jeweilig verwendete Antriebs-Vorrichtung 13 kann über an sich dem Fachmann bekannte und aus geeigneten Beispielen entsprechend den Gegebenheiten auszuwählende kraftschlüssige Verbindungen mit dem oberen Ende 11 des Kern-Zylinders 10 verbunden sein.

Die Explosionsdarstellung der Figur 2 zeigt als ein Beispiel einer solchen kraftschlüssigen Verbindung ein Schloß 13 b, das den eigentlichen Handgriff 13 a mit dem oberen Ende 11 des Kern-Zylinders 10 verbindet. In bekannter Weise weist in diesem Beispiel einer kraftschlüssigen Verbindung das Schloß 13 b eine in den Anschluß des Handgriffs 13 a hineinreichende (beispielsweise U-förmig ausgebildete) Zunge und an der gegenüberliegenden Seite zwei Rasterpunkte 13 c auf, die infolge der U-Form der Zunge eine gewisse Beweglichkeit relativ zueinander aufweisen und die bei Herstellen der kraftschlüssigen Verbindung durch Einschieben in eine Aufnahme im oberen Ende 11 des Kern-Zylinders 10 in entsprechende Löcher (oder sogar Blindlöcher) nahe des oberen Endes des Kern-Zylinders 10 eingreifen können und ein Verriegeln bewirken können.

In dem vorstehend beispielhaft beschriebenen Fall der kraftschlüssigen Verbindung ist diese auf bekannte Weise lösbar, so daß der Handgriff abgelöst und durch einen anderen oder durch eine Verbindung zu einem maschinellen Antrieb der erfindungsgemäßen Schneid-Vorrichtung 1 ersetzt werden kann. Die kraftschlüssige Verbindung zu einem maschinellen Antrieb kann dieselbe sein wie die des Handgriffs, wie sie vorstehend beschrieben wurde, oder kann eine davon verschiedene sein, wie sie der Fachmann für einen Antrieb einer Vorrichtung wie der vorliegenden aus dem Stand der Technik kennt und wie er sie den Gegebenheiten entsprechend aus einer ganzen Anzahl von maschinellen Antrieben ohne Beschränkung auswählen kann.

Ein weiteres Element der erfindungsgemäßen Schneidvorrichtung ist eine erfindungsgemäß am anderen Ende (also quasi am "fruchtseitigen Ende") 12 des Kern-Zylinders 10 anbringbare (und im Betriebszustand angebrachte) und von dem Ende 12 lösbare Schneid-Einrichtung 14. Der Begriff "anbringbar", wie er in der vorliegenden Beschreibung und in den Patentansprüchen verwendet wird, wird in seiner Bedeutung breit verstanden und schließt jede mögliche Form des für ein funktionelles Verbinden erforderliche Anbringens ein und impliziert darüber hinaus, daß eine solche Verbindung (nach dem Anbringen und nach dem Ausführen der vorgesehenen Funktion) auch wieder lösbar ist, ohne ein irreversibles Zerstören der Elemente einer solchen (im vorliegenden Fall bevorzugt kraftschlüssigen) Verbindung einzuschließen. "Anbringbar" bedeutet also das Herstellen einer für das Funktionieren erforderlichen oder zumindest erwünschten kraftschlüssigen Verbindung zwischen Kern-Zylinder 10 und Schneid-Einrichtung 14, die bei Unterbrechung oder nach Abschluß des Schneid-Vorgangs (z. B. zum Zweck des Reinigens) wieder gelöst werden kann und - sobald ein erneutes Funktionieren der Schneid-Vorrichtung 1 gemäß der Erfindung erwünscht ist - erneut hergestellt und wieder gelöst werden kann, usw..

Die erfindungsgemäß am unteren Ende 12 des Kern-Zylinders 10 kraftschlüssig anbringbare Schneid-Einrichtung 14 ist am (in Funktions-Ausrichtung der Schneid-Vorrichtung 1) unteren Ende 12 des Kern-Zylinders 10 über eine (später wieder lösbare) kraftschlüssige Verbindung 18 anbringbar. Solche kraftschlüssige Verbindungen zwischen zwei mit derselben Kraft-Richtung wirkenden Elementen sind dem Fachmann aus dem Stand der Technik bekannt und können den Gegebenheiten entsprechend aus einer ganzen Anzahl denkbarer kraftschlüssiger Verbindungen ausgewählt werden. Erfindungsgemäß hat sich jedoch eine ausgewählte Gruppe von kraftschlüssigen Verbindungen für die Zwecke der Erfindung besonders bewährt und ist kommt daher erfindungsgemäß zum Einsatz:

In bevorzugten Ausführungsformen der Erfindung handelt es sich bei der kraftschlüssigen (und wieder lösbaren) Verbindung 18 zwischen dem unteren Ende 12 des Kern-Zylinders 10 und der Schneid-Einrichtung 14 um ein Gewinde 18 a. In diesem Fall weist also entweder das untere Ende 12 des Kern-Zylinders 10 ein sogenanntes "männliches" Gewinde 18 a 1 (d. h. ein Gewinde auf der Zylinder-Außenseite) und die Schneid-Einrichtung 14 ein sogenanntes "weibliches Gewinde" 18 a 2 (d. h. ein zu dem "männlichen Gewinde" passendes Gewinde auf der Innenseite des Anschlusses der Schneid-Einrichtung 14) auf, oder das untere Ende 12 des Kern-Zylinders 10 weist ein sogenanntes "weibliches" Gewinde (nicht gezeigt) (d. h. ein Gewinde auf der Zylinder-Innenseite) und die Schneid-Einrichtung 14 ein sogenanntes "männliches Gewinde" (d. h. ein zu dem "weiblichen Gewinde" passendes Gewinde auf der Außenseite des Anschlusses der Schneid-Einrichtung 14) auf. Die kraftschlüssige Verbindung über ein Gewinde ermöglicht ein schnelles und zuverlässiges kraftschlüssiges Verbinden der beiden Komponenten Kern-Zylinder 10 und Schneid-Einrichtung 14, besteht nur aus den beiden Teilen mit ihren Gewinden, ist einfach in der Herstellung, erfordert keine technisch komplizierte Lösung bei Zusatz- und Ersatzteilen (was eine Rolle beim erfindungsgemäßen Austausch und Ersetzen einer Schneid-Einrichtung 14 durch eine andere spielt und damit eine Aufgabe der Erfindung in überraschend einfacher Weise löst) und läßt sich problemlos reinigen und hygienisch sauber halten, was im Bereich der Handhabung von Lebensmitteln unerläßlich ist.

In anderen bevorzugten Ausführungsformen der Erfindung handelt es sich bei der kraftschlüssigen (und wieder lösbaren) Verbindung 18 zwischen dem unteren Ende 12 des Kern-Zylinders 10 und der Schneid-Einrichtung 14 um eine Rast-Verbindung 18 b. Diese kann ähnlich zu der oben beschriebenen Rast-Verbindung zwischen dem oberen Ende 11 des Kern-Zylinders 10 und der Antriebs-Einrichtung 13 bzw. dem Handgriff 13 sein oder kann von dieser verschieden sein. Im erstgenannten Fall weist also entweder das untere Ende 12 des Kern-Zylinders 10 einen sogenannten Steck-Ansatz (nicht gezeigt) und die Schneid-Einrichtung 14 eine Aufnahme (nicht gezeigt) (z. B. eine zu dem Steckansatz passendes Hülse auf der Innenseite des Anschlusses der Schneid-Einrichtung 14) auf, oder das untere Ende 12 des Kern-Zylinders 10 weist eine Aufnahme, z. B. eine Hülse (nicht gezeigt) auf der Zylinder-Innenseite auf, und die Schneid-Einrichtung 14 weist einen Steck-Ansatz passend zu der innenseitigen Hülse des unteren Endes 12 des Kern-Zylinders 10 auf. Die Verbindung kann über Stecker o. ä. gegen ein Lösen zusätzlich gesichert werden. Es können auch andere Rast-Verbindungen gewählt werden. Die kraftschlüssige Verbindung über eine Rast-Verbindung ermöglicht ein schnelles und zuverlässiges kraftschlüssiges Verbinden der beiden Komponenten Kern-Zylinder 10 und Schneid-Einrichtung 14, besteht nur aus den beiden spiegelbildlichen Steck-Teilen (Stecker und Aufnahme), ist einfach in der Herstellung, erfordert keine technisch komplizierte Lösung bei Zusatz- und Ersatzteilen (was eine Rolle beim erfindungsgemäßen Austausch und Ersetzen einer Schneid-Einrichtung 14 durch eine andere spielt und damit eine Aufgabe der Erfindung in überraschend einfacher Weise löst), ist so gut wie verschleißfrei und läßt sich ebenfalls problemlos reinigen und hygienisch sauber halten, was im Bereich der Handhabung von Lebensmitteln unerläßlich ist.

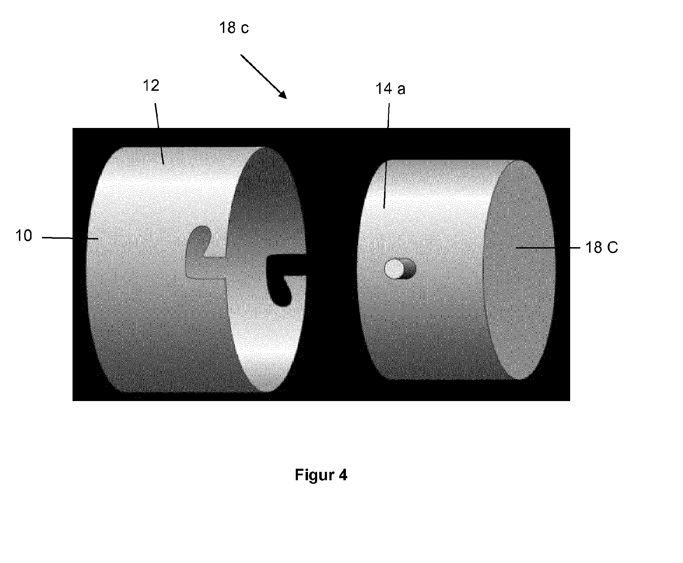

In weiteren bevorzugten Ausführungsformen der Erfindung kann die kraftschlüssige (und wieder lösbare) Verbindung zwischen dem unteren Ende 12 Kern-Zylinders 10 und der Schneid-Einrichtung 14 auch hergestellt werden durch eine sogenannte "Bajonett-Verbindung", wie sie schematisch in Figur 4 gezeigt ist. Darunter versteht man allgemein eine schnell herstellbare und später auch wieder lösbare mechanische Verbindung zweier zylindrisch geformter Teile in Richtung von deren gemeinsamer Längsachse, bei der die beiden Komponenten der Verbindung ineinandergesteckt und durch entgegengesetztes Drehen um die gemeinsame Längsachse gesichert; der Vorgang des Lösens der beiden Teile voneinander erfolgt in umgekehrter Reihenfolge der Schritte (Drehen um die gemeinsame Längsachse in umgekehrter Richtung zum Lösen der Sicherung und "Entstecken" durch Auseinanderziehen beider Teile).

Es wird zur weiteren Erläuterung auf Figur 4 Bezug genommen: Bekanntermaßen weist bei einer Bajonett-Verbindung zweier zylindrisch geformter Teile der Teil, der über den anderen Teil geschoben wird, an seinem beim Überschieben vorangehenden Rand mindestens einen (in Figur 4 zwei um 180 ° versetzte; denkbar sind auch drei beispielsweise um 120 ° versetzte oder vier beispielsweise um 90 ° versetzte) parallel zur Längsachse der beiden zu verbindenden Teile verlaufende(n) Längsschlitz(e) auf, an dessen/deren vom Rand entfernten Ende(n) im rechten Winkel jeweils ein (gegebenenfalls noch eine Einrastnut aufweisender) Querschlitz angesetzt ist. Der Teil, der in den anderen eingeschoben wird, weist entsprechend einen (in Figur 4 gezeigt: zwei; denkbar auch wie im oben geschilderten Fall: drei oder vier) entsprechend versetzte Verriegelungsknöpfe auf. Diese greifen bei Verriegeln in die Längsschlitze ein, werden nach innen bis zum Querschlitz geführt und dort durch gegenläufiges Drehen der beiden zylindrischen Teile um ihre gemeinsame Längsachse bis zum Anschlag geführt (und gegebenenfalls in der Einrastnut gesichert, um eine feste und stabile Verbindung der beiden Teile zu bewirken.

Eine entsprechende Bajonett-Verbindung 18 c kann auch in einer weiteren bevorzugten Ausführungsform der erfindungsgemäßen Schneid-Vorrichtung 1 das untere Ende 12 des Kern-Zylinders 10 mit dem oberen Ende 14 a der Schneid-Einrichtung 14 sicher und lösbar verbinden. Dabei kann sowohl das untere Ende 12 des Kern-Zylinders 10 der Teil der Schneid-Vorrichtung 1 sein, der bei Verriegelung des Bajonett-Verschlusses 18 c über das obere Ende 14 a der Schneid-Einrichtung 14 geschoben wird, wobei der letztere die Verriegelungsknöpfe aufweist, oder es kann umgekehrt der obere Teil 14 a der Schneid-Einrichtung 14 der Teil der Schneid-Vorrichtung 1 sein, der bei Verriegelung des Bajonett-Verschlusses 18 c über das untere Ende 12 des Kern-Zylinders 10 geschoben wird, wobei letzterer die Verriegelungsknöpfe aufweist. Die entstehende Bajonett-Verbindung 18 c kann mit wenigen Handgriffen sicher hergestellt werden und ist durch Umkehrung der Verriegelungsschritte auch schnell wieder lösbar.

In einer weiteren bevorzugten Ausführungsform der erfindungsgemäßen Schneid-Vorrichtung 1 kann die lösbare kraftschlüssige Verbindung 18 zwischen dem unteren Ende 12 des Kern-Zylinders 10 und dem oberen Ende 14 a der Schneid-Einrichtung 14 alternativ hergestellt werden durch eine Steck-Verbindung 18 d. In diesem Fall einer lösbaren kraftschlüssigen Verbindung 18 kann entweder das untere Ende 12 des Kern-Zylinders 10 in das obere Ende 14 a der Schneid-Einrichtung 14 konzentrisch eingesteckt werden oder kann umgekehrt das obere Ende 14 a der Schneid-Einrichtung 14 in das untere Ende 12 des Kern-Zylinders 10 konzentrisch eingesteckt werden. Zur Herstellung des Kraftschlusses beim Drehen weisen dann beide miteinander zu der lösbaren kraftschlüssigen Verbindung 18 verbindbaren Teile an der Verbindungsstelle eine Nut bzw. einen in die Nut eingreifenden Stift auf (wie sie dem Fachmann beispielsweise aus anderen Steck-Verbindungen wie beispielsweise Elektro-Steckern bekannt sind). Die entstehende Steck-Verbindung 18 d kann mit wenigen Handgriffen sicher hergestellt werden und ist durch Umkehrung der Einsteck-Schritte auch schnell wieder lösbar.

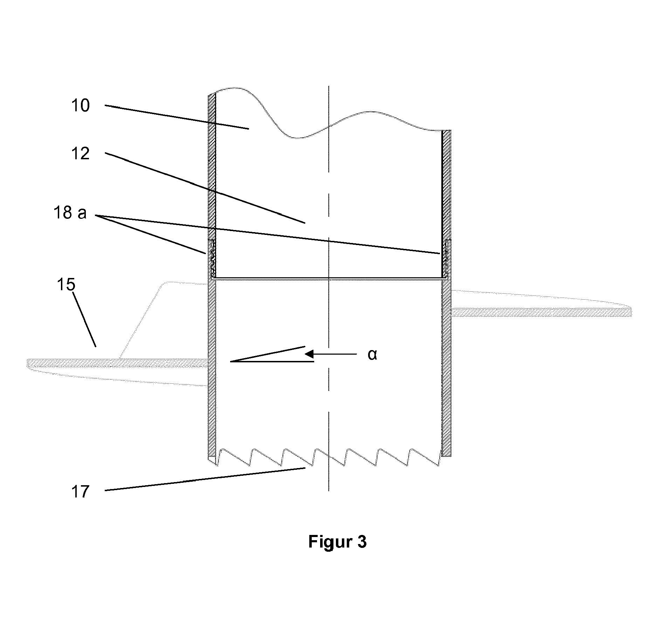

Die erfindungsgemäße Schneid-Einrichtung 14 umfaßt weiter einen (vorzugsweise wegen der drehenden Bewegung beim Betätigen runden) Schneide-Teller 15. Dieser ist auch in den Figuren 1 A, 1 D, 2 und 3 gezeigt, wobei Figur 3 eine Detail-Darstellung in seitlicher Schnitt-Ansicht zeigt.

Erfindungsgemäß hat der runde Schneide-Teller 15, dessen Ansicht von unten in Figur 1 C zu sehen ist, die auch den runden Querschnitt zeigt, einen Durchmesser, der - vom Grundsatz her - geringer sein muß als der Querschnitt einer zu schneidenden Frucht, beispielsweise einer Ananas-Frucht, damit der Fruchtfleisch-Körper A durch den Schneid-Vorgang von der Schale getrennt werden kann. Da jedoch Früchte nicht mit einheitlichem Durchmesser wachsen, muß der Querschnitt des Schneide-Tellers 15 dem Querschnitt von zu schneidenden Früchten, beispielsweise zu schneidenden Ananas-Früchten, angepaßt werden. Dazu sieht die Erfindung vor, daß vorzugsweise die Schneid-Einrichtungen 14 Schneide-Teller 15 unterschiedlicher Durchmesser für zu schneidende Früchte, beispielsweise Ananas-Früchte, unterschiedlicher Durchmesser aufweisen können. Die Durchmesser der Schneide-Teller 15 der Schneid-Einrichtung 14 können im Bereich von 20 mm bis 120 mm liegen (dieser Bereich übergreift im Wesentlichen Durchmesser möglicher Früchte, beispielsweise Ananas-Früchte, ohne die Erfindung auf diese zu beschränken, ohne daß in der Praxis unbedingt Schneid-Einrichtungen 15 mit Schneide-Tellern 15 über den gesamten Durchmesser-Bereich zur Verfügung gestellt werden müssen, aber durchaus können). Beispielhafte Werte der Durchmesser der Schneide-Teller 15 der Schneid-Einrichtung 14 sind - ohne daß dies eine Beschränkung bedeuten soll - 55 mm, 60 mm, 65 mm, 70 mm, 75 mm, 80 mm, 85 mm, 90 mm, 95 mm, 100 mm, 105 mm, 110 mm. Damit sind wahlweise einzeln über eine (wie oben beschriebene) lösbare kraftschlüssige Verbindung 18 am unteren Ende 12 des Kern-Zylinders 10 Schneid-Einrichtungen 14 mit Schneide-Tellern 15 unterschiedlichen Durchmessers anbringbar.

Die erfindungsgemäße Vorrichtung kann daher vorteilhafterweise an zu schneidende Früchte mit unterschiedlichem Durchmesser in einfacher Weise durch schnelles und einfach zu bewirkendes Anbringen einer anderen Schneid-Einrichtung 14 mit einem Schneide-Teller 15 unterschiedlichen Durchmessers angepaßt werden.

Der Schneide-Teller 15 weist in Drehrichtung eine Steigung auf, die durch einen Winkel α (relativ zur Senkrechten zu der Längsachse des Kern-Zylinders 10) gekennzeichnet ist. Mit anderen Worten: Der Schneide-Teller 15 ist relativ zur Senkrechten zur Längsachse des Kern-Zylinders 10 um einen mehr oder weniger großen Winkel α geneigt. Diese Neigung um den Winkel α resultiert ein einer Art "Schraubengang" des Schneide-Tellers 15 und erbringt das Herausschneiden von Helix-artigen Fruchtfleisch-Windungen aus dem Fruchtfleisch-Körper der zu schneidenden Frucht. Größere Winkel α führen zu dickeren Fruchtfleisch-Windungen, und kleinere Winkel α führen zu dünneren Fruchtfleisch-Windungen. Erfindungsgemäß können die Winkel α liegen in einem Bereich von 5 ° ≤ α ≤ 30 °, wobei ein Fachmann aufgrund seines Fachwissens den best-angepaßten Winkel-Bereich durch einige wenige orientierende Vorversuche einfach ermitteln kann.

Erfindungsmäß hat der runde Schneid-Teller 15, dessen seitliche Ansicht am besten in den Figuren 1 A, 1 D und 2 zu sehen ist, eine bestimmte Steigung α, die - wie oben angegeben - vorzugsweise im Bereich 5 ° ≤ α ≤ 30 ° liegt. Da die Dicke der zu schneidenden Fruchtfleisch-Windungen jedoch unterschiedlich gewünscht wird, ist es wünschenswert und damit bevorzugt, daß die Steigung α des Schneide-Tellers 15 der Steigung α für die gewünschte Dicke von zu schneidenden Fruchtfleisch-Windungen, beispielsweise von zu schneidenden Ananas-Früchten, angepaßt werden kann. Dazu sieht die Erfindung vor, daß vorzugsweise die Schneid-Einrichtungen 14 Schneide-Teller 15 unterschiedlicher Steigungen α für unterschiedliche Dicken der zu schneidenden Fruchtfleisch-Windungen, beispielsweise von Ananas-Früchten, aufweisen können. Die Werte der Steigung der Schneide-Teller 15 der Schneid-Einrichtung 14 können im Bereich von 5 Grad (°) bis 30 ° liegen. Beispielhafte Werte der Steigung α der Schneide-Teller 15 der Schneid-Einrichtung 14 sind - ohne daß dies eine Beschränkung bedeuten soll - 5 °, 7 °, 10 °, 12 °, 14 °, 16 °, 18 °, 20 °, 22 °, 24 °, 26 °, 28 °, 30 °. Damit sind wahlweise einzeln über eine (wie oben beschriebene) lösbare kraftschlüssige Verbindung 18 am unteren Ende 12 des Kern-Zylinders 10 Schneid-Einrichtungen 14 mit Schneide-Tellern 15 unterschiedlicher Steigung α anbringbar. Die erfindungsgemäße Vorrichtung kann daher vorteilhafterweise an den Wunsch, mit unterschiedlichen Schneid-Einrichtungen 14 Fruchtfleisch-Windungen mit unterschiedlicher Dicke zu erhalten, in einfacher Weise durch schnelles und einfach zu bewirkendes Anbringen einer anderen Schneid-Einrichtung 14 mit einer bestimmten Steigung α angepaßt werden.

Erfindungsgemäß weist die Schneid-Einrichtung 14 auf ihrer in Schneidrichtung vorderen Seite (siehe Figuren 1 A und 2) 15 a des runden Schneide-Tellers 15 ein Schneid-Messer 16 auf. Wie oben bereits beschrieben, wird bei dem Schneide-Vorgang sowohl die Schale vom Fruchtfleisch-Körper A getrennt, als auch werden aus dem Fruchtfleisch-Körper A Helix-artige Fruchtfleisch-Windungen herausgeschnitten. Für den erstgenannten Schneide-Vorgang weist die Schneid-Einrichtung 14 auf ihrer in Schneidrichtung vorderen Seite 15 a des Schneide-Tellers 15 ein Schneidmesser 16 b auf, das in einer Richtung parallel zur Achse des Kern-Zylinders 10 und an der Peripherie (also mit radial maximalem Abstand von der Drehachse) angeordnet ist und damit auf der Innenseite der Schale der Frucht schneidet. Vorzugsweise verläuft die Schneide des Messers (in seitlicher Ansicht; siehe Figuren 1 A, 1 D und 2) nicht senkrecht. In einer bevorzugten Ausführungsform hat das Messer 16 eine schräg verlaufende Schneide, wobei die (in Drehrichtung des Schneide-Tellers 15) vorderste (und damit zuerst in das Fruchtfleisch "einlaufende") Spitze der Schneide 16 b der obere Teil der Schneide des Schneid-Messers 16 ist.

Der hinterste (und damit im Verlauf des Vorgangs des Trennens von Fruchtfisch-Körper A und Schale zuletzt in das Fruchtfleisch "einlaufende") Teil der Schneide 16 b, also der untere Teil der Schneide des Schneid-Messers 16 geht in einem rechten Winkel in den (radial verlaufenden) Schneiden-Teil 16 a über, der zum Schneiden der Fruchtfleisch-Windungen aus dem von der Schale befreiten Fruchtfleisch-Körper A vorgesehen ist und der in Unteransicht in Figur 1 C zu sehen ist. In seitlicher Ansicht entgegen der Laufrichtung weist also das Schneid-Messer 16 die Form des Buchstaben "L" (seitenverkehrt) auf, wobei der vertikale Balken des "L" für den Teil der Schneide 16 b für das Abtrennen der Schale steht und der horizontale Balken des "L" für den Teil der Schneide 16 a für das Schneiden der Fruchtfleisch-Windungen steht. Bei Drehen der Schneid-Vorrichtung 1 in den Fruchtfleisch-Körper A dringt das Schneid-Messer 16 in das Fruchtfleisch ein und trennt dabei die Schale vom Fruchtfleisch-Körper A und schneidet gleichzeitig den Fruchtfleisch-Körper A in Helix-artige Fruchtfleisch-Windungen.

Die einzelnen Teile der Schneide des Schneid-Messers 16 können erfindungsgemäß aus einer glatten Schneide bestehen oder können aus einer gezackten oder mit Sägezähnen versehenen Schneide bestehen. Letzteres ist aus den Figuren 1 A und 2 ersichtlich. Der Fachmann kann aus den zur Verfügung stehenden Möglichkeiten der Schneide diejenige für eine bestimmte Frucht (beispielsweise für das Schneiden einer Ananas-Frucht) die geeignete nach den Gegebenheiten entsprechend bekannter Parameter auswählen, ohne daß die Erfindung diesbezüglich irgendwelchen Beschränkungen unterliegt.

Erfindungsgemäß weist die Schneid-Einrichtung 14 weiter auf der Unterseite des runden Schneide-Tellers 15 eine mit dem Kern-Zylinder 10 konzentrische Schneide 17, die (in Funktionsausrichtung der erfindungsgemäßen Schneid-Vorrichtung 1) nach unten zeigt. Diese Schneide 17 ist aus den Figuren 1 A, 1 C, 1 D und 2 ersichtlich und dient dazu, den (harten und oft nur schwer genießbaren) Kern einer Frucht, beispielsweise einer Ananas-Frucht, vom Fruchtfleisch-Körper A zu trennen (und dadurch ein kreisrundes Loch im Innern der geschnittenen Fruchtfleisch-Windungen zu erzeugen. Der harte Kern des Frucht verbleibt im Innern des Kern-Zylinders 10, bis der Schneide-Vorgang beendet ist, und wird dann in einem Stück aus dem Innern des Kern-Zylinders entfernt und verworfen.

Für die Schneide 17 gilt ebenfalls das weiter oben für die Schneiden 16 Festgestellte: Die Schneide kann eine glatte Schneid-Kante aufweisen oder kann gezackt oder mit Sägezähnen versehen sein. Letzteres ist in den Figuren 1 A, 1 D und 2 gezeigt. Weiter kann (muß jedoch nicht zwingend) der Durchmesser der Schneide 17 bei Schneide-Tellern 15 unterschiedlichen Durchmessers auch unterschiedlich groß sein, um dadurch Frucht-Kernen unterschiedlichen Durchmessers (bei kleinen oder großen Früchten) Rechnung tragen zu können.

Die Erfindung betrifft auch die Verwendung der obigen Schneid-Vorrichtung 1 zum Schälen, Entkernen und Schneiden von Früchten, insbesondere beim Schneiden von Ananas-Früchten. Bei der erfindungsgemäßen Verwendung wird - vorzugsweise, jedoch nicht notwendigerweise nach Abtrennen von Fruchtständen und Stielen von der Frucht (beispielsweise von einer Ananas-Frucht) die erfindungsgemäße Schneid-Vorrichtung 1, beispielsweise (jedoch ohne Beschränkung hierauf, es ist auch ein maschineller Antrieb möglich) mittels eines Handgriffs 13 in den Kopfteil eines reifen Frucht geschraubt, wobei die Vorrichtung in der in den Figuren abgebildeten Form für den Betrieb durch einen Rechtshänder vorgesehen ist; eine spiegelbildliche Ausführungsform würde für den Betrieb mit der linken Hand geeignet sein. Der Schneide-Teller 15 der Schneid-Einrichtung 14 wird anhand des Durchmessers der Frucht so ausgesucht, daß der Schneide-Teller 15 einen ausreichenden Durchmesser hat. Weiter wird der Schneide-Teller 15 der Schneid-Einrichtung 14 hinsichtlich seiner Steigung α so ausgesucht, daß durch Schneiden der ausgesuchten Frucht (beispielsweise einer Ananas-Frucht) Fruchtfleisch-Windungen der gewünschten Dicke entstehen können. Die so ausgesuchte Schneide-Einrichtung 14 wird mittels der lösbaren kraftschlüssigen Verbindung 18 an dem unteren Ende 12 des Kern-Zylinders 10 angebracht, beispielsweise (jedoch nicht beschränkend) mittels eines Gewindes 18 a angeschraubt oder mittels einer Rast-Verbindung 18 b oder einer Bajonett-Verbindung 18 c aufgesteckt.

Danach wird die Schneid-Vorrichtung 1 mittels der mit dem Kern-Zylinder 10 konzentrischen Schneide 17 auf der Unterseite des Schneide-Tellers 15 auf dem harten Kern der Frucht (beispielsweise der Ananas-Frucht) zentriert und dann mittels Drucks über die Antriebsvorrichtung 13, beispielsweise über den Handgriff 13, in die Frucht hineingeschraubt. Im Wege des Schraubens wird mit dem Schalen-Schneiden-Teil 16 b des Schneid-Messers 16 der Schneid-Einrichtung 14 die Schale der Frucht von dem Fruchtfleisch-Körper A getrennt. Gleichzeitig gräbt sich der Fruchtfleisch-Windungen-Schneiden-Teil 16 a des Schneid-Messers 16 der Schneid-Einrichtung 14 mit einer Steilheit, die von dem Winkel α abhängig ist, unter Schneiden von mehr oder weniger dicken Helix-artigen Fruchtfleisch-Windungen in den Fruchtfleisch-Körper A hinein.

Vorteilhaft für die erfindungsgemäße Verwendung ist, daß man die Größe des Schneid-Tellers (und damit der Schneidmesser 16) variieren und solche Schneid-Einrichtungen 14 über die lösbare kraftschlüssige Verbindung 18 mit dem unteren Ende 12 des Kern-Zylinders 10 kraftschlüssig verbinden kann, die ein ökonomisches Schneiden der Frucht, beispielsweise einer Ananas-Frucht, erlauben und weder zu viel Fruchtfleisch an der Schale lassen (was bedeutet, daß die Schneid-Einrichtung 14 einen zu kleinen Schneide-Teller 15 für die geschnittene Frucht hat), noch Spelzen der Schale in dem Fruchtfleisch-Körper A belassen (was bedeutet, daß die Schneid-Einrichtung 14 einen zu großen Schneide-Teller 15 für die geschnittene Frucht hat). Des Weiteren kann man auch die Kern-Schneide 17 der Fruchtgröße (und damit einem beliebigen KernDurchmesser anpassen.

Weiter vorteilhaft für die erfindungsgemäße Verwendung ist, daß man die Steigung α des Schneide-Tellers 15 (und damit auch der Schneid-Messer 16) variieren und solche Schneid-Einrichtungen 14 über die lösbare kraftschlüssige Verbindung 18 mit dem unteren Ende 12 des Kern-Zylinders 10 kraftschlüssig verbinden kann, die ein Schneiden gewünscht dicker Fruchtfleisch-Windungen bzw. Fruchtfleisch-Scheiben der Frucht, beispielsweise einer Ananas-Frucht, erlauben.

Schließlich kann man auch die Schneiden 16 und 17 der Schneid-Einrichtung 14 an die Natur der Frucht anpassen, indem man glatte Schneiden oder gezackte Schneiden oder Schneiden mit Sägezähnen auswählt, je nach dem zu schneidenden Fruchtfleisch.

Die Erfindung wurde vorstehend mit Bezug auf die Figuren beispielhaft erläutert und anhand ihrer bevorzugten Ausführungsformen beschrieben. Die Beschreibung der Erfindung anhand ihrer bevorzugten Ausführungsformen ist jedoch lediglich beispielhaft und dient nur der Erläuterung der Erfindung mit dem Ziel eines besseren Verständnisses der Erfindung. Die Erfindung ist jedoch nicht auf diese beschriebenen bevorzugten Ausführungsformen beschränkt.

### Bezugszeichenliste

- 1: Schneid-Vorrichtung

- 10: Kern-Zylinder
- 11: oberes Ende des Kern-Zylinders 10
- 12: unteres Ende des Kern-Zylinders 10
- 13: Antriebsvorrichtung, Handgriff
- 13 a: Anschluß des Handgriffs 13
- 13 b: Schloß des Handgriffs 13
- 13 c: Rasterpunkte des Schlosses 13 b
- 14: Schneid-Einrichtung
- 14 a: oberes Ende der Schneid-Einrichtung 14
- 15: Schneide-Teller
- 15 a: Vorderseite Schneide-Teller 15 (in Schneide-Richtung)
- 16: Schneid-Messer
- 16 a: Schneid-Messer--Teil für Fruchtfleisch-Windungen
- 16 b: Schneid-Messer--Teil für Schale
- 17: konzentrische Schneide für den Frucht-Kern
- 18: lösbare kraftschlüssige Verbindung zwischen Kernzylinder 10 und Schneid-Einrichtung 14
- 18 a: Gewinde
- 18 b: Rast-Verbindung
- 18 c: Bajonett-Verbindung
- 18 d: Steck-Verbindung

## Patentansprüche

1. Schneid-Vorrichtung (1) zum Trennen eines Fruchtfleisch-Körpers (A) einer reifen Frucht von Schale und Kern und gleichzeitiges Schneiden des Fruchtfleisch-Körpers (A) in Form von Helix-artigen Fruchtfleisch-Windungen, mit einem Kern-Zylinder (10), einer an dessen einem Ende (11) kraftschlüssig angebrachten Antriebsvorrichtung (13) und einer an dessen anderem Ende (12) kraftschlüssig angebrachten Schneid-Einrichtung (14) mit einem eine Steigung (α) in Drehrichtung aufweisenden runden Schneide-Teller (15), wobei die Schneid-Einrichtung (14) auf ihrer in Schneidrichtung vorderen Seite (15 a) des runden Schneide-Tellers (15) ein in seitlicher Ansicht L-förmiges Schneidmesser (16) aufweist, das bei Drehen der Schneid-Vorrichtung (1) in den Fruchtfleisch-Körper (A) eindringt und dabei die Schale vom Fruchtfleisch-Körper (A) trennt und den Fruchtfleisch-Körper (A) gleichzeitig in Helix-artige Fruchtfleisch-Windungen schneidet, worin die Schneid-Einrichtung (14) auf der Unterseite des runden Schneide-Tellers (15) eine mit dem Kern-Zylinder (10) konzentrische Schneide (17) zum innenseitigen Trennen des Frucht-Kerns vom Fruchtfleisch-Körper (A) aufweist, wobei die Schneid-Einrichtung (14) in Bezug auf den Kern-Zylinder (10) mittels einer an das untere Ende (12) anbringbaren und von dem unteren Ende lösbaren kraftschlüssigen Verbindung (18) angebracht ist.

2. Schneid-Vorrichtung (1) nach Anspruch 1, worin Schneid-Einrichtungen (14) Schneide-Teller (15) unterschiedlicher Durchmesser für Früchte unterschiedlicher Durchmesser aufweisen können, die wahlweise einzeln über die lösbare kraftschlüssige Verbindung (18) am unteren Ende (12) des Kern-Zylinders (10) anbringbar sind.

3. Schneid-Vorrichtung (1) nach Anspruch 1 oder 2, worin Schneid-Einrichtungen (14) Schneide-Teller (15) unterschiedlicher Steigung (α, α') zum Schneiden Helix-artiger Fruchtfleisch-Windungen unterschiedlicher Dicke aufweisen können, die wahlweise einzeln über die lösbare kraftschlüssige Verbindung (18) am unteren Ende (12) des Kern-Zylinders (10) anbringbar sind.

4. Schneid-Vorrichtung (1) nach einem der Ansprüche 1 bis 3, worin die lösbare kraftschlüssige Verbindung (18) ein Gewinde (18 a) ist.

5. Schneid-Vorrichtung (1) nach einem der Ansprüche 1 bis 3, worin die lösbare kraftschlüssige Verbindung (18) eine Rast-Verbindung (18 b) ist.

6. Schneid-Vorrichtung (1) nach einem der Ansprüche 1 bis 3, worin die lösbare kraftschlüssige Verbindung (18) eine Bajonett-Verbindung (18 c) ist.

7. Schneid-Vorrichtung (1) nach einem der Ansprüche 1 bis 3, worin die lösbare kraftschlüssige Verbindung (18) eine Steck-Verbindung (18 d) ist.

8. Schneid-Vorrichtung (1) nach einem oder mehreren der Ansprüche 1 bis 7, worin die Schneiden der Schneidmesser (16) und/oder (17) glatte Schneiden sind oder gezackte Schneiden sind oder Schneiden mit Sägezähnen sind.

9. Verwendung einer Schneid-Vorrichtung (1) nach einem oder mehreren der Ansprüche 1 bis 8 zum Schälen, Entkernen und Schneiden von Früchten und insbesondere zum Schneiden von Ananas.
